# EUROPÄISCHE PATENTANMELDUNG

(11) **EP 2 676 546 A1**
(43) Veröffentlichungstag der Anmeldung: **25.12.2013**
(21) Anmeldenummer: 13171119.4
(22) Anmeldetag: 07.06.2013
(51) Int. Cl.: A21B 3/13, A21C 11/02

(54) **Backware aus einem Gärteig mit einer rinnenförmigen Vertiefung und Backvorrichtung sowie Verfahren zur Herstellung derselben**

(30) Priorität: 22.06.2012 DE 202012006088 U
(71) Anmelder: Ostermair, Michael F. J., 82178 Puchheim (DE)
(72) Erfinder: Ostermair, Michael F. J., 82178 Puchheim (DE)
(74) Vertreter: Grünecker, Kinkeldey, Stockmair & Schwanhäusser

(57) **Zusammenfassung**

Die Erfindung betrifft eine Backware aus einem Gärteig mit einer rinnenförmigen Vertiefung und eine Backvorrichtung sowie ein Verfahren zur Herstellung derselben. Der Erfindung liegt die Aufgabe zugrunde, eine für den Handverzehr bestimmte Backware aus einem Gärteig sowie eine Backvorrichtung und ein Verfahren zur Herstellung derselben bereitzustellen, wobei die Backware unter Behebung der sich aus dem Stand der Technik ergebenden Nachteile nach dem Backvorgang mit einer Füllung versehen werden kann. Die Aufgabe wird gelöst durch eine Backvorrichtung zur Herstellung einer Backware aus einem Gärteig, insbesondere aus einem Brotteig, mit wenigstens einer rinnenförmigen Vertiefung, wobei die Backvorrichtung wenigstens eine rinnenförmige Aufnahme für einen Teigrohling und wenigstens einen Stempel aufweist, wobei die Backvorrichtung zwischen einer Öffnungsstellung zum Einbringen des Teigrohlings in die Aufnahme sowie zur Entnahme der Backware aus der Backvorrichtung, und einer Arbeitsstellung, in welcher der Stempel und die Aufnahme einen Formhohlraum für die Backware mit der rinnenförmigen Vertiefung bilden, überführbar ist. Die Aufgabe wird ebenso gelöst durch eine Backware aus einem Gärteig mit einer rinnenförmigen Vertiefung und ein Verfahren zu deren Herstellung.

## Beschreibung

Die Erfindung betrifft eine Backware aus einem Gärteig mit einer rinnenförmigen Vertiefung und eine Backvorrichtung sowie ein Verfahren zur Herstellung derselben.

Als Backwaren werden Lebensmittel aus Getreide oder Getreideerzeugnissen bezeichnet, die gebacken werden. Der Begriff Backware im Sinne der Erfindung bezieht sich auf den Zustand vor und/oder nach dem Backen. Hergestellt werden Backwaren in der Regel von Bäckereien. Grob eingeteilt werden Backwaren in die Gruppen Brot, Kleingebäck und Feingebäck. Im Vordergrund dieser Erfindung stehen Backwaren aus einem Gärteig, insbesondere Brotteig, die nach dem Backvorgang mit einer Füllung versehen werden können und für den Handverzehr bestimmt sind.

Bei herkömmlichen Backwaren aus einem Gärteig wie Brot, Baguette oder Semmeln gestaltet sich das Anbringen der Füllung wie auch der anschließende Handverzehr sehr umständlich. Zur Füllung werden die herkömmlichen Backwaren in der Regel durch- oder aufgeschnitten, mit der Füllung versehen und ggf. wieder zugeklappt. Da die Schnittfläche in der Regel eben ist, kann die Füllung leicht austreten. Überdies wird der teigige Kern durch die Füllung in der Regel recht schnell aufgeweicht, so dass die Haltbarkeit einer solchen gefüllten Backware sehr begrenzt ist. Die herkömmliche Art der Füllung gestaltet sich als umständlich und zeitaufwendig, und ist aufgrund der individuellen Form und Größe der herkömmlichen Backwaren für eine Automatisierung eher unzugänglich.

Der Erfindung liegt die Aufgabe zugrunde, eine für den Handverzehr geeignete Backware aus einem Gärteig sowie eine Backvorrichtung zur Herstellung derselben bereitzustellen, wobei die Backware unter Behebung der sich aus dem Stand der Technik ergebenden Nachteile nach dem Backvorgang mit einer Füllung versehen werden kann.

Die Aufgabe wird gelöst durch die Gegenstände der unabhängigen Ansprüche.

Ein erster Aspekt der Erfindung betrifft eine Backvorrichtung zur Herstellung einer Backware aus einem Gärteig, insbesondere aus einem Brotteig, mit wenigstens einer rinnenförmigen Vertiefung, wobei die Backvorrichtung wenigstens eine rinnenförmige Aufnahme für einen Teigrohling und wenigstens einen Stempel aufweist, wobei die Backvorrichtung zwischen einer Öffnungsstellung zum Einbringen des Teigrohlings in die Aufnahme sowie zur Entnahme der Backware aus der Backvorrichtung, und einer Arbeitsstellung, in welcher der Stempel und die Aufnahme einen Formhohlraum für die Backware mit der rinnenförmigen Vertiefung bilden, überführbar ist. Durch die erfindungsgemäße Backvorrichtung wird wenigstens eine rinnenförmige Vertiefung an der Außenseite der Backware gebildet, so dass diese mit einer Füllung versehen werden kann, ohne die Backware zuvor aufzuschneiden. Durch die Rinnenform wird die Füllung beim Handverzehr in der Vertiefung gehalten. Dadurch, dass die rinnenförmige Vertiefung an der Außenseite der Backware gebildet wird, die durch die Formgebung in der Backvorrichtung sowie durch den nachfolgenden Backprozess gefestigt ist, wird ein Aufweichen der Backware durch die Füllung zumindest verzögert oder sogar gänzlich verhindert.

Vorteilhafte Ausführungen der Erfindung sind Gegenstände der Unteransprüche.

Es kann sich als hilfreich erweisen, wenn die Aufnahme und der Stempel komplementäre Geometrien aufweisen. Dadurch kann die Backware optimal geformt werden und während des Gärvorgangs ideal in den durch die Backvorrichtung gebildeten Formhohlraum hineinwachsen. Der Begriff "komplementäre Geometrien" ist so zu verstehen, dass die Außenkontur des Stempels der Innenkontur der Aufnahme im Wesentlichen folgt. Dadurch kann die Dicke der Backware sehr genau bestimmt werden und die ideale Backzeit mit hoher Genauigkeit ermittelt werden. Durch die komplementären Geometrien kann die Backware durch die Backvorrichtung nach der Art einer Prägevorrichtung geprägt werden. Beispielsweise ist eine Arbeitsfläche des Stempels konvex ausgebildet und eine korrespondierende Arbeitsfläche der Aufnahme konkav ausgebildet.

Es kann von Vorteil sein, wenn die Aufnahme und der Stempel derart zusammenwirken, dass die rinnenförmige Vertiefung der Backware entlang der rinnenförmigen Aufnahme ausgebildet wird und/oder die rinnenförmige Vertiefung wenigstens einseitig, vorzugsweise beidseitig, abgesetzt wird. Dadurch kann eine besonders formschöne und funktionale Backware geschaffen werden. Vorzugsweise erstreckt sich die Vertiefung exakt entlang der Längsachse der Backware. Bevorzugt ist lediglich ein Ende der Vertiefung abgesetzt bzw. geschlossen und das andere Ende geöffnet, wobei das geöffnete Ende die Essseite der Backware vorgibt. Üblicherweise wird das Essende der Backware beim Handverzehr gegenüber dem Halteende leicht angehoben, so dass die bspw. cremige Füllung unter dem Einfluss der Gewichtskraft zum Halteende läuft. Vorzugsweise ist das dem geöffneten Ende gegenüber liegende Ende der Vertiefung abgesetzt, so dass ein Austreten der Füllung beim Handverzehr verhindert werden kann.

Es kann sich als hilfreich erweisen, wenn der Formhohlraum wenigstens einen vorzugsweise U-förmigen Spalt aufinreist, in den der Teigrohling beim Gärprozess wachsen bzw. steigen kann, wobei der in den Spalt wachsende bzw. steigende Teig vorzugsweise wenigstens einen Rand der rinnenförmigen Vertiefung bildet. Durch die Teigmenge und ggf. die Dauer des Gärprozesses kann die Form und Höhe des Randes, und damit indirekt das Volumen der Vertiefung bestimmt werden.

Es kann von Vorteil sein, wenn die Backvorrichtung eine Verriegelungseinrichtung aufweist, um den Stempel gegenüber der Aufnahme in der Öffnungsstellung und/oder in der Arbeitsstellung der Backvorrichtung zu verriegeln. Dadurch kann bspw. verhindert werden, dass der bei der Gärung in der Aufnahme steigende Teig den Stempel nach oben drückt. Ferner kann der Stempel in der Öffnungsstellung gesichert werden, um das Be- und Entladen der Aufnahme nicht zu beeinträchtigen. Besonders vorteilhaft ist eine Ausführung, bei der die Backvorrichtung eine Verriegelungseinrichtung aufweist, um eine Vielzahl von Stempeln gleichzeitig gegenüber einer Vielzahl von Aufnahmen in der Öffnungsstellung und/oder in der Arbeitsstellung der Backvorrichtung zu verriegeln. Vorzugsweise umfasst die Backvorrichtung eine aufnahmeseitige Haltevorrichtung und eine stempelseitige Haltevorrichtung, wobei die aufnahmeseitige Haltevorrichtung mit einer Vielzahl von Aufnahmen verbunden ist und die stempelseitige Haltevorrichtung mit einer Vielzahl von Stempeln verbunden ist, wobei die Verriegelungseinrichtung derart ausgebildet ist, um die aufnahmeseitige Haltevorrichtung und die stempelseitige Haltevorrichtung in der Öffnungsstellung und/oder in der Arbeitsstellung der Backvorrichtung gegeneinander zu verriegeln.

Es kann aber auch vorteilhaft sein, wenn die Aufnahme wenigstens eine der folgenden Anforderungen erfüllt:
- Die Aufnahme befindet sich in/an einer unteren Form der Backvorrichtung.
- Die Aufnahme umfasst eine Beschichtung, vorzugsweise eine Antihaftbeschichtung.
- Die Aufnahme umfasst im Wesentlichen ein spiegelsymmetrisches Querschnittsprofil, vorzugsweise ein U-förmiges oder ω-förmiges Querschnittsprofil.
- Die Aufnahme ist als Matrize ausgebildet.
- Die Aufnahme umfasst wenigstens zwei Arbeitsflächen, die sich zwischen dem Boden und der Mündung der Aufnahme erstrecken und vorzugsweise im Bereich einer Längsmittelachse der Aufnahme treffen, wobei die Arbeitsflächen bevorzugt einander zugewandt sind und zumindest in der Arbeitsstellung der Backvorrichtung in Richtung des Stempels weisen, wobei die Arbeitsflächen vorzugsweise zur Mündung der Aufnahme hin eine abnehmende Krümmung aufweisen und/oder im Wesentlichen parabelförmig ausgebildet sind.
- Die Aufnahme umfasst wenigstens einen Vorsprung, der vorzugsweise in Richtung der Mündung der Aufnahme hervorsteht, wobei sich der Vorsprung bevorzugt entlang oder parallel zur Längsachse der Aufnahme, bevorzugt über die gesamte Länge der Aufnahme, erstreckt, wobei die Höhe des Vorsprungs vorzugsweise im Bereich von 2 bis 20%, bevorzugt im Bereich von 5 bis 10% der maximalen Höhe der Aufnahme liegt, wobei sich der Vorsprung bevorzugt gratförmig vom Boden der Aufnahme erhebt.
- Die Aufnahme erstreckt sich im Wesentlichen entlang einer geraden oder gekrümmten Linie.
- Die Aufnahme weist eine Länge im Bereich von 5 bis 50 cm, vorzugsweise eine Länge im Bereich von 15 bis 40 cm, bevorzugt eine Länge im Bereich von 25 bis 35 cm auf.
- Die Aufnahme weist eine maximale Breite im Bereich von 2 bis 10 cm, vorzugsweise eine maximale Breite im Bereich von 4 bis 8 cm, bevorzugt eine maximale Breite im Bereich von 5 bis 7 cm auf.
- Die Aufnahme weist eine maximale Höhe im Bereich von 1 bis 10 cm, vorzugsweise eine maximale Höhe im Bereich von 2 bis 8 cm, bevorzugt eine maximale Höhe im Bereich von 3 bis 5 cm auf.
- Das Querschnittsprofil der Aufnahme ist über wenigstens 50%, vorzugsweise über wenigstens 60%, bevorzugt über wenigstens 75% der Länge, besonders bevorzugt über die gesamte Länge der Aufnahme konstant.
- Die Breite der Aufnahme nimmt vom Boden bis zur Mündung der Aufnahme zu.
- Die Aufnahme ist gegenüber dem Stempel bewegbar.
- Die Aufnahme ist aus Metall, vorzugsweise aus Aluminium, ausgebildet.
- Die Längsachse der Aufnahme ist zumindest in der Arbeitsstellung der Backvorrichtung im Wesentlichen in einer horizontalen Ebene ausgerichtet.
- Eine Vielzahl von Aufnahmen ist vorzugsweise parallel nebeneinander und/oder hintereinander in einer unteren Form der Backvorrichtung ausgebildet.

Es kann ebenso von Vorteil sein, wenn der Stempel wenigstens eine der folgenden Anforderungen erfüllt:
- Der Stempel befindet sich in/an einer oberen Form der Backvorrichtung.
- Der Stempel umfasst eine Beschichtung, vorzugsweise eine Antihaftbeschichtung.
- Der Stempel umfasst im Wesentlichen ein keilförmiges, vorzugsweise ein D-förmiges oder Δ-förmiges Querschnittsprofil, bevorzugt ein spiegelsymmetrisches Querschnittsprofil.
- Der Stempel ist als länglicher Profilstab ausgebildet.
- Der Stempel ist als Patrize ausgebildet.
- Der Stempel umfasst eine Basis, die zumindest in der Arbeitsstellung der Backvorrichtung von der Aufnahme abgewandt ist, und einen Scheitel, der zumindest in der Arbeitsstellung der Backvorrichtung der Aufnahme zugewandt ist, wobei sich die Breite des Stempels vorzugsweise von der Basis bis zum Scheitel verringert.
- Der Stempel umfasst wenigstens zwei Arbeitsflächen, die sich zwischen der Basis und dem Scheitel erstrecken und vorzugsweise und im Bereich des Scheitels treffen, wobei die Arbeitsflächen bevorzugt voneinander abgewandt sind und zumindest in der Arbeitsstellung der Backvorrichtung den Arbeitsflächen der Aufnahme zugewandt sind und/oder frontal gegenüberstehen, wobei die Arbeitsflächen vorzugsweise erste Abschnitte aufweisen, die bevorzugt angrenzend an die Basis angeordnet sind und sich im Wesentlichen in parallelen Ebenen erstrecken, wobei die Arbeitsflächen vorzugsweise zweite Abschnitte aufweisen, die vorzugsweise zwischen der Basis und dem Scheitel angeordnet sind und zum Scheitel hin eine zunehmende Krümmung aufweisen, wobei die Arbeitsflächen vorzugsweise dritte Abschnitte aufweisen, die im Bereich des Scheitels bündig ineinander übergehen.
- Der Stempel erstreckt sich zumindest in der Arbeitsstellung der Backvorrichtung parallel zur Längsachse der Aufnahme.
- Der Stempel weist eine Länge im Bereich von 5 bis 35 cm, vorzugsweise im Bereich von 10 bis 30 cm, bevorzugt im Bereich von 15 bis 25 cm auf.
- Der Stempel weist eine maximale Breite im Bereich von 1 bis 8 cm, vorzugsweise im Bereich von 1,5 bis 4 cm, bevorzugt im Bereich von 2 bis 3 cm auf.
- Der Stempel weist eine maximale Höhe im Bereich von 1 bis 8 cm, vorzugsweise im Bereich von 2 bis 5 cm, bevorzugt im Bereich von 2,5 bis 3,5 cm auf.
- Der Stempel erstreckt sich zumindest in der Arbeitsstellung der Backvorrichtung über wenigstens 50%, vorzugsweise über wenigstens 60%, bevorzugt über wenigstens 75% der Länge der Aufnahme und/oder über weniger als 100%, vorzugsweise über weniger als 95%, bevorzugt über weniger als 90% der Länge der Aufnahme.
- Der Stempel erstreckt sich zumindest in der Arbeitsstellung der Backvorrichtung über wenigstens 50%, vorzugsweise über wenigstens 60%, bevorzugt über wenigstens 75% der maximalen Breite und/oder der maximalen Höhe der Aufnahme.
- Das Querschnittsprofil des Stempels ist über wenigstens 50%, vorzugsweise über wenigstens 60%, bevorzugt über wenigstens 75% der Länge, besonders bevorzugt über die gesamte Länge des Stempels konstant.
- Der Stempel ist gegenüber der Aufnahme bewegbar.
- Der Stempel ist aus Metall, vorzugsweise aus Aluminium, ausgebildet.
- Die Längsachse des Stempels ist zumindest in der Arbeitsstellung der Backvorrichtung im Wesentlichen in einer horizontalen Ebene ausgerichtet.
- Eine Vielzahl von Stempeln ist vorzugsweise parallel nebeneinander und/oder hintereinander in einer oberen Form der Backvorrichtung ausgebildet.

Die genannten Merkmale erweisen sich vor allem unter fertigungstechnischen Aspekten als besonders hilfreich.

Ein weiterer Aspekt der Erfindung betrifft ein Verfahren zur Herstellung einer Backware aus einem Gärteig, insbesondere aus einem Brotteig, mit wenigstens einer rinnenförmigen Vertiefung, unter Verwendung der Backvorrichtung nach wenigstens einer der vorangehenden Ausführungen, umfassend folgende Schritte:
- Bereitstellen der Backvorrichtung in der Öffnungsstellung,
- Anordnen eines vorzugsweise länglichen Teigrohlings in der Aufnahme der Backvorrichtung,
- Überführen der Backvorrichtung aus der Öffnungsstellung in die Arbeitsstellung, so dass der Teigrohling in der Aufnahme verteilt wird und/oder die wenigstens eine rinnenförmige Vertiefung im Teigrohling ausgebildet wird,
- Gären und ggf. Backen, insbesondere Vorbacken und/oder Tiefkühlen und/oder Fertigbacken des Teigrohlings in der Arbeitsstellung der Backvorrichtung,
- Überführen der Backvorrichtung aus der Arbeitsstellung in die Öffnungsstellung, und
- Entnahme der Backware aus der Backvorrichtung.

In einem weiteren Schritt kann eine Füllung in die Vertiefung der Backware eingebracht werden.

Ein weiterer Aspekt der Erfindung betrifft eine Backware aus einem Gärteig, insbesondere aus einem Brotteig, mit wenigstens einer durch eine Backvorrichtung erzeugten, rinnenförmigen Vertiefung, vorzugsweise hergestellt unter Verwendung der Backvorrichtung nach wenigstens einer der vorangehenden Ausführungen und/oder gemäß dem Verfahren nach dem vorangehenden Aspekt der Erfindung.

Es kann sich als hilfreich erweisen, wenn die Backware wenigstens eine der folgenden Anforderungen erfüllt:
- Die Backware umfasst einen Kern aus porösem Teig und eine vollständig um den Kern geschlossene Kruste.
- Die Vertiefung wird durch die Kruste der Backware definiert.
- Die Backware, insbesondere die Kruste der Backware, bildet einen Rand um die Vertiefung, wobei der Rand vorzugsweise zusammenhängend und/oder U-förmig ausgebildet ist.
- Die Vertiefung ist an wenigstens einem Ende geöffnet und/oder an wenigstens einem Ende, vorzugsweise an beiden Enden, geschlossen.
- Die Backware umfasst wenigstens eine Nut an einer von der Vertiefung abweisenden Seite der Backware, wobei sich die Nut vorzugsweise parallel zur Vertiefung bevorzugt über die gesamte Länge der Backware erstreckt.
- Die Nut wird durch die Kruste der Backware definiert.
- Die Vertiefung befindet sich an der Oberseite der Backware und/oder die Nut an der Unterseite der Backware.
- Die Backware weist einen im Wesentlichen halbzylindrischen und/oder rinnenförmigen Umriss auf.
- Die Backware weist im Wesentlichen ein U-förmiges, V-förmiges oder W-förmiges Querschnittsprofil auf.
- Die Backware umfasst eine vorzugsweise cremige Füllung, die in der Vertiefung aufgenommen ist.
- Die Backware ist stabil, vorzugsweise kippfrei und/oder rollfrei, auf einer ebenen Unterlage absetzbar, so dass die Füllung ohne auszutreten in der Vertiefung gehalten wird.
- Die Backware umfasst wenigstens zwei voneinander beabstandete Aufstandflächen zum Aufstellen der Backware auf eine ebene Unterlage, wobei die Nut und/oder die Vertiefung vorzugsweise zwischen den Aufstandflächen angeordnet ist.
- Die Backware ist für den Handverzehr bestimmt und dimensioniert.

Durch die genannten Merkmale kann eine besonders vorteilhafte Ausgestaltung der Backware erreicht werden. Insbesondere günstig ist die Ausführung, bei der die Backware wenigstens zwei voneinander beabstandete Aufstandflächen zum Absetzen der Backware auf einer ebenen Unterlage umfasst. Die Aufstandflächen sind vorzugsweise so angeordnet, dass der Schwerpunkt der Backware mit Füllung zwischen den Aufstandflächen liegt bzw. der Vektor der Gewichtskraft zwischen den Aufstandflächen hindurch läuft. Dadurch wird die gefüllte Backware stabil im Gleichgewichtszustand gehalten. Da die Menge und das Gewicht der Füllung in vielen Fällen variieren, ist es vorteilhaft, wenn die Backware symmetrisch ausgebildet ist und/oder die Vertiefung in Projektion auf die ebene Unterlage zwischen den Aufstandflächen angeordnet ist. So kann in der Regel ein Kippen oder Rollen der gefüllten Backware verhindert werden.

Vorteilhafte Weiterbildungen der Erfindung ergeben sich aus der Kombination der Merkmale der Ansprüche mit den Merkmalen aus der Beschreibung und aus den Zeichnungen.

### Kurze Beschreibung der Figuren

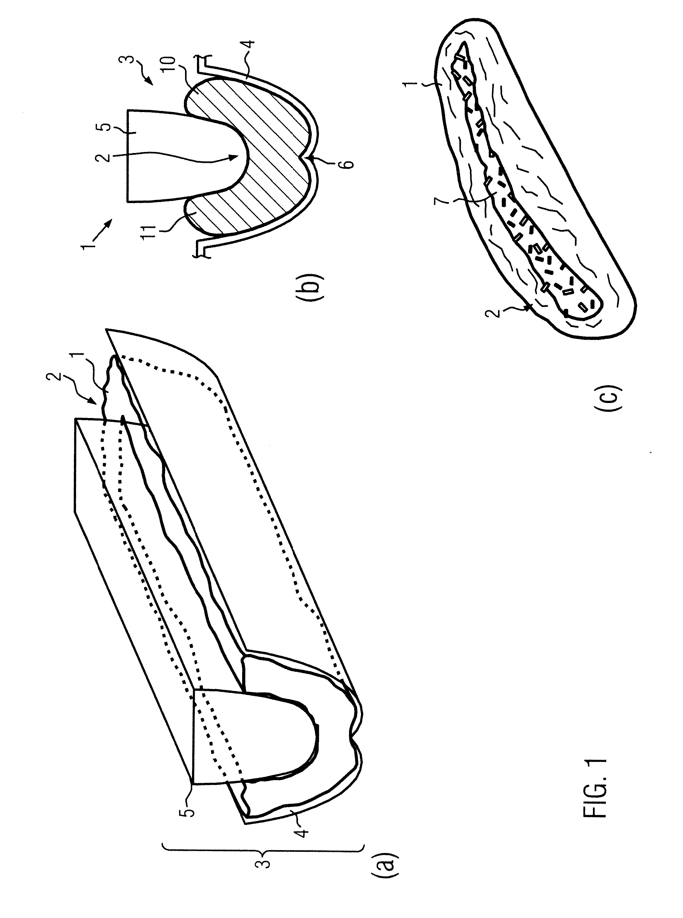

- Fig. 1: zeigt (a) eine perspektivische und schematische Ansicht der gebackenen Backware in der Backvorrichtung, wobei sich die Backvorrichtung in der Arbeitsstellung befindet; (b) eine schematische Ansicht der gebackenen Backware aus Ansicht (a); und (c) eine perspektivische und schematische Ansicht der gebackenen Backware mit einer cremigen Füllung in der rinnenförmigen Vertiefung.

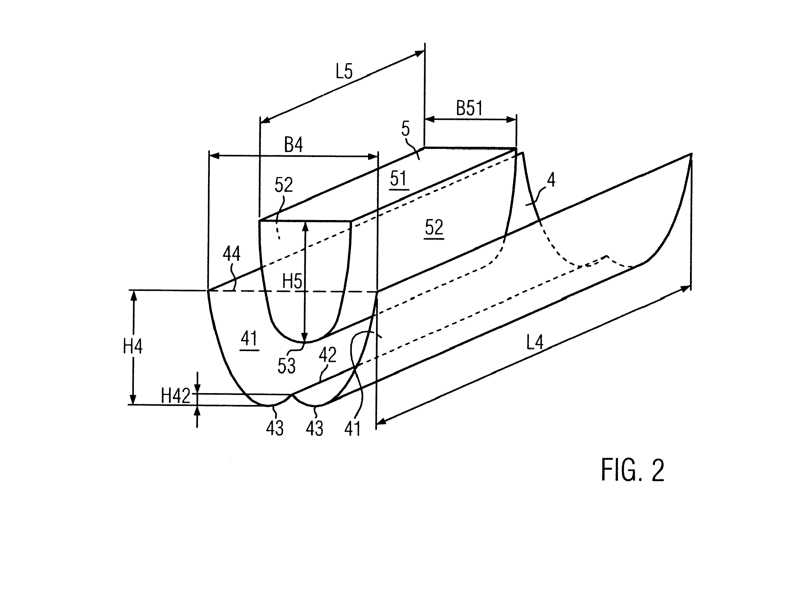

- Fig. 2: zeigt eine perspektivische und schematische Ansicht der Backvorrichtung in der Arbeitsstellung.

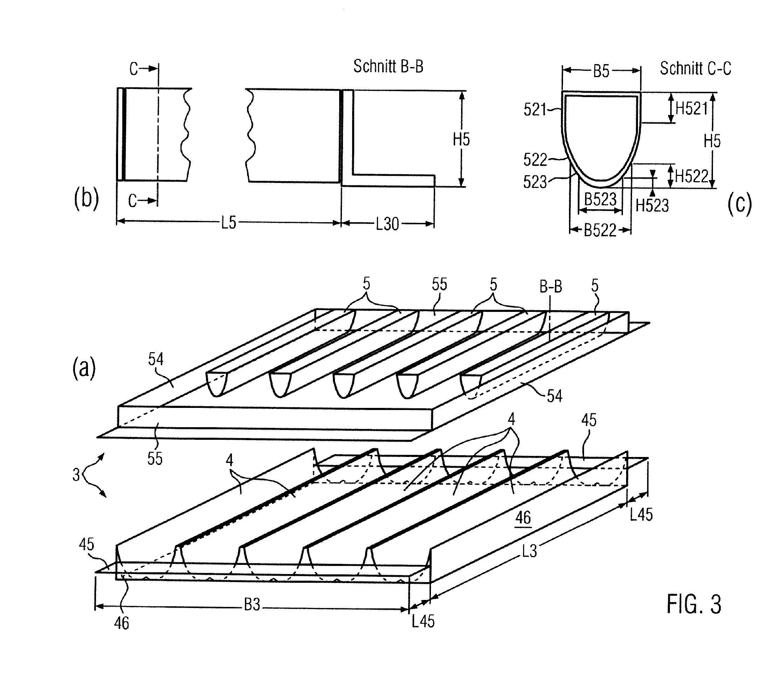

- Fig. 3: zeigt (a) eine perspektivische und schematische Ansicht einer Backvorrichtung gemäß einem Ausführungsbeispiel der Erfindung; (b) einen Schnitt B-B aus Ansicht (a); und (c) einen Schnitt C-C aus Ansicht (b).

### Detaillierte Beschreibung des bevorzugten Ausführungsbeispiels

Die Erfindung betrifft eine für den Handverzehr bestimmte Backware 1 in liegender, in etwa zylindrischer Form, mit einer oben in Längsrichtung einseitig offenen abgesetzten Vertiefung bzw. Füllnut 2. Die Backware 1 enthält auf der Unterseite eine in Längsrichtung durchgehend nach innen gerichtete Nut 6 bzw. Einkerbung. Die Vertiefung 2 dient zum Füllen mit unterschiedlichen Lebensmitteln, jedoch speziell für cremige Lebensmittel. Die einseitig geschlossene Vertiefung 2 verhindert ein Austreten der Füllung beim Verzehr. Ohne diese Vertiefung 2 könnte die Füllung 7 beim Hineinbeißen nach hinten hinausgepresst werden bzw. hinauslaufen. Die feste Konsistenz der Vertiefung 2 nach dem Backen ermöglicht das Füllen der Backware 1, die auch als "Bread Dog's" bezeichnet wird, mit cremigen Füllungen 7, ohne dass diese die Backware 1 aufweichen, bzw. von der Backware 1 aufgesaugt werden.

Aufgrund der runden und länglichen Formgebung der Backware 1 und dem aufgrund der oberseitigen Füllung 7 hohen Schwerpunkt, könnte die Backware 1 ohne unterseitige Nut 6 nicht stabil abgelegt werden und beim Ablegen möglicherweise rollen bzw. umkippen. Die durch die Backvorrichtung 3 erzeugte, nach innen gerichtete Nut 6 bzw. Einkerbung im fertigen Produkt behebt dieses Problem. Diese Nut 6 bzw. Einkerbung bildet zwei Aufstandsflächen in Gestalt von "Backen" am Boden des Produktes, wodurch die ästhetische und runde Formgebung bestehen bleibt und das Produkt "standfest" gemacht wird.

Die Form und Dimension der Backware 1 sind für den Handverzehr ausgelegt. Der Durchmesser der Backware 1 ermöglicht ein einfaches Abbeißen (mundgerecht) sowie ermöglicht die längliche, runde Form einen handlichen Verzehr.

Eine geeignete Backvorrichtung 3 besteht im Wesentlichen aus zwei Teilen, wobei eine Unter-Form eine charakteristische Backform mit wenigstens einer durchgehend in Längsrichtung nach oben gerichteten Aufnahme 4 umfasst, und eine Ober-Form einen Stempel 5 umfasst, der vorzugsweise als länglicher Profilstab zur Prägung der Vertiefung 2 ausgebildet ist. Die Ober- und Unter-Formen passen aufeinander. Die Aufnahme 4 und der Stempel 5 weisen komplementäre Geometrien auf und wirken wie die Matrize und die Patrize einer Prägevorrichtung zusammen, indem der Stempel 5 einen in der Aufnahme 4 angeordneten Teigrohling verteilt und zur Ausbildung der rinnenförmigen Vertiefung 2 sowie der bodenseitigen Nut 6 in die Aufnahme 4 drückt.

Zur Herstellung der Backware 1 wird zunächst die Ober-Form mit dem Stempel 5 von der Unter-Form abgehoben. Sodann wird ein länglicher Teigrohling in die Aufnahme 4 der Unter-Form positioniert eingelegt. Danach wird die Ober-Form auf die Unterform aufgelegt und der Stempel 5 durch Druck auf die Ober-Form in den Teigrohling gedrückt, um die Vertiefung 2 zu erzeugen. Ebenso nimmt der Teigrohling die Formgebung der Aufnahme 4 der Unter-Form an. Dabei wird der Teigrohling geprägt. Aufgrund der Geometrien der Aufnahme 4 und des Stempels 5 ergibt sich in der Backware 1 eine nach oben offene, länglich geformte, abgesetzte Vertiefung 2, die horizontal nur einseitig offen ist und auf der anderen Seite geschlossen bleibt. Durch einen charakteristischen, nach oben gerichteten Vorsprung 42 im Bereich des Bodens 43 der Aufnahme 4 entsteht am Boden der Backware 1 die nach innen gerichtete Nut 6. Während des Gärprozesses nimmt der Teigrohling an Volumen zu und erhält seine endgültige Form. Im anschließenden optionalen Backvorgang wird der Teigrohling fest (gebacken) und behält seine oben beschriebene Form. Abschließend wird die Ober-Form abgehoben und das fertige Produkt entnommen. Die Backware 1 kann nun mit der Füllung 7 versehen werden.

In einer bevorzugten Ausführung wird der Teigrohling derart in der Backvorrichtung 3 angeordnet, dass sich die gewünschte abgesetzte Vertiefung 2 ergibt, wobei der Teigrohling an der geschlossenen Seite der Vertiefung 2 die Aufnahme 4 aber nicht vollständig füllt, sondern während des Gär- und/oder Backprozesses innerhalb der Aufnahme 4 noch aufgehen kann. Dadurch kann das Halteende der Backware 1 eine natürliche (gerundete) Form wie z. B. das Ende eines Baguettes aufweisen.

Das bevorzugte Ausführungsbeispiel wird nachstehend mit Bezug auf die beiliegenden Zeichnungen im Detail beschrieben.

Die Backvorrichtung 3 des bevorzugten Ausführungsbeispiels umfasst wenigstens eine rinnenförmige Aufnahme 4 für einen Teigrohling und wenigstens einen Stempel 5, und ist zwischen einer Öffnungsstellung zum Einbringen des Teigrohlings in die Aufnahme 4 sowie zur Entnahme der Backware 1 aus der Backvorrichtung 3, und einer Arbeitsstellung, in welcher der Stempel 5 und die Aufnahme 4 einen Formhohlraum für die Backware 1 mit der rinnenförmigen Vertiefung 2 bilden, überführbar. Die Aufnahme 4 und der Stempel 5 weisen komplementäre Geometrien auf und wirken derart zusammen, dass die rinnenförmige Vertiefung 2 der Backware 1 entlang der rinnenförmigen Aufnahme 4 ausgebildet wird und die rinnenförmige Vertiefung 2 einseitig abgesetzt wird.

Eine Vielzahl identischer oder verschiedener Aufnahmen 4 ist parallel nebeneinander und/oder hintereinander in einer unteren Form der Backvorrichtung 3 ausgebildet. Jede Aufnahme 4 umfasst im Wesentlichen ein spiegelsymmetrisches, w-förmiges Querschnittsprofil, und zwei Arbeitsflächen 41, die sich zwischen dem Boden 43 und der Mündung 44 der Aufnahme 4 erstrecken und im Bereich einer Längsmittelachse der Aufnahme 4 treffen. Die Arbeitsflächen 41 sind einander zugewandt und weisen in der Arbeitsstellung der Backvorrichtung 3 in Richtung des Stempels 5. Die Krümmung der Arbeitsflächen 41 nimmt zur Mündung 44 der Aufnahme 4 hin ab, während die Breite B4 der Aufnahme 4 vom Boden 43 bis zur Mündung 44 der Aufnahme 4 zunimmt. Beide Arbeitsflächen 41 sind im Wesentlichen parabelförmig ausgebildet. Jede Aufnahme 4 umfasst einen in Richtung der Mündung 44 der Aufnahme 4 hervorstehenden Vorsprung 42, der sich parallel zur Längsachse der Aufnahme 4 gratförmig über die gesamte Länge der Aufnahme 4 erstreckt. Die Höhe H42 des Vorsprungs 42 beträgt bspw. ca. 10% der maximalen Höhe H4 der Aufnahme 4. Jede Aufnahme 4 erstreckt sich entlang einer geraden Linie und weist über ihre gesamte Länge L4 ein konstantes Querschnittsprofil auf. Die Längsachse der Aufnahme 4 ist in der Arbeitsstellung der Backvorrichtung 3 in einer horizontalen Ebene ausgerichtet und die Aufnahme 4 umfasst bspw. eine Länge L4 von ca. 30 cm, eine Breite B4 von ca. 6 cm und eine Höhe H4 von ca. 4 cm. L-förmige Profile 45 schließen sich beidseitig in Längsrichtung an die Aufnahme 4 an, wobei der horizontale Schenkel jedes L-Profils 45 über eine Länge L45 von ca. 3,0 cm in Achsrichtung der Aufnahme 9 hervorsteht. Die L-Profile 45 bilden gemeinsam mit zwei damit verbundenen Flachprofilen 46 eine aufnahmeseitige Haltevorrichtung, die mit einer Vielzahl von Aufnahmen 4 verbunden ist. Die Gesamtbreite B3 der Backvorrichtung 3 beträgt bspw. ca. 40,5 cm bei einer Gesamtlänge L3 von ca. 30,5 cm. Die Backvorrichtung 3 kann insbesondere auch mit Standardmaßen von Industriebacköfen mit einer Gesamtbreite B3 von 40 cm und einer Gesamtlänge L3 von 60 cm ausgeführt werden, wobei jeweils zwei Aufnahmen 4 in Längsrichtung hintereinander und fünf Aufnahmen parallel nebeneinander angeordnet sind.

Eine Vielzahl identischer oder verschiedener Stempel 5 ist parallel nebeneinander und/oder hintereinander in einer oberen Form der Backvorrichtung 3 ausgebildet. Zwei L-förmige Profile 55 und zwei damit verbundene Flachprofile 54 bilden einen die Stempel 5 umschließenden Rahmen und definieren eine in sich geschlossene, stempelseitige Haltevorrichtung. Die Stempel 5 stehen parallel zueinander in vorgegebenen Abständen und abgestimmt auf die Längsrichtungen der zugeordneten Aufnahmen 4 von einem der L-Profile 55 in Richtung des anderen L-Profils 55 hervor. Bei Bedarf können die aufnahmeseitige Haltevorrichtung und die stempelseitige Haltevorrichtung in der Öffnungsstellung und/oder in der Arbeitsstellung der Backvorrichtung durch eine Verriegelungseinrichtung gegeneinander verriegelt werden. Eine Verriegelung der aufnahmeseitigen Haltevorrichtung und der stempelseitigen Haltevorrichtung in der Arbeitsstellung der Backvorrichtung kann beispielsweise dadurch bewerkstelligt werden, dass die aufnahmeseitigen und stempelseitigen Haltevorrichtungen in ofenseitige Führungsabschnitte eingeschoben und dabei gleichzeitig in der Ebene senkrecht zur Einschieberichtung gegeneinander verriegelt werden. Die aufnahmeseitigen und stempelseitigen Haltevorrichtungen können auch direkt miteinander verbunden werden, beispielsweise durch Schrauben, Klemmen oder gelenkige Verbindungen. Ein Stempel 5 ist als Patrize in Gestalt eines länglichen Profilstabs ausgebildet und umfasst im Wesentlichen ein keilförmiges, näherungsweise D-förmiges und spiegelsymmetrisches Querschnittsprofil, wobei sich die Breite B51 des Stempels 5 vorzugsweise von einer Basis 51 bis zu einem Scheitel 53 verringert. Zwei Arbeitsflächen 52 erstrecken sich zwischen der Basis 51 und dem Scheitel 53 und treffen sich im Bereich des Scheitels 53. Die Arbeitsflächen 52 weisen voneinander ab und sind in der Arbeitsstellung der Backvorrichtung 3 den Arbeitsflächen 41 der Aufnahme 4 zugewandt, um diesen frontal gegen-überzustehen. Beide Arbeitsflächen 52 umfassen angrenzend an die Basis 51 erste Abschnitte 521, die sich im Wesentlichen in parallelen Ebenen erstrecken, daran anschließend zweite Abschnitte 522, die zwischen der Basis 51 und dem Scheitel 53 angeordnet sind und zum Scheitel 53 hin eine zunehmende Krümmung aufweisen, und weiter daran anschließend dritte Abschnitte 523, die im Bereich des Scheitels 53 bündig ineinander übergehen. Der Stempel 5 erstreckt sich in der Arbeitsstellung der Backvorrichtung 3 parallel zur Längsachse der Aufnahme 4 und weist bspw. eine Länge L5 von 20 cm, eine Breite B51 an der Basis 51 von ca. 2,5 cm sowie eine Höhe H5 von der Basis 51 bis zum Scheitel 53 von ca. 3 cm auf. Eine Höhe H521 des ersten Abschnitts 521 gemessen von der Basis 51 beträgt bspw. ca. 1 cm. Eine Breite B522 des Stempels 5 im zweiten Abschnitt 522 beträgt bspw. ca. 2,0 cm und eine Breite B523 des Stempels 5 im dritten Abschnitt 523 beträgt bspw. ca. 1,5 cm, wobei die Breiten B522 und B523 parallel zur Basis 51 gemessen werden. Eine Höhe H522 des Stempels 5 im zweiten Abschnitt 522 beträgt bspw. ca. 1,0 cm und eine Höhe H523 des Stempels 5 im dritten Abschnitt 523 beträgt bspw. ca. 0,5 cm, wobei die Höhen H522 und H523 vom Scheitel 53 senkrecht zur Basis 51 gemessen werden. Der Stempel 5 erstreckt sich in der Arbeitsstellung der Backvorrichtung bspw. über wenigstens 50% aber weniger als 90% der Länge L4 und/oder Breite B4 und/oder Höhe H4 der Aufnahme 4. Das Querschnittsprofil des Stempels 5 ist über dessen gesamte Länge L5 konstant. Der Stempel 5 ist gegenüber der Aufnahme 4 bewegbar und zumindest in der Arbeitsstellung der Backvorrichtung 3 im Wesentlichen in einer horizontalen Ebene ausgerichtet.

Durch die Form der Aufnahme 4 und des Stempels 5 kann der Teigrohling beim Gärprozess ideal in den Formhohlraum hineinwachsen. Der Formhohlraum kann offen oder geschlossen sein. Vorzugsweise definieren die Aufnahme 4 und der Stempel 5 in der Arbeitsstellung der Backvorrichtung 3 einen im Wesentlichen U-förmigen Spalt, in den der Teigrohling beim Gärprozess steigen kann, wobei der U-förmig steigende Teigrohling den Rand der Vertiefung 2 bildet.

Die Backware 1 wird aus einem Gärteig, insbesondere aus einem Brotteig, gebacken und umfasst eine durch eine Backvorrichtung 3 erzeugte, rinnenförmige Vertiefung 2 an der Oberseite sowie eine durchgehende Nut 6 an der Unterseite. Im gebackenen Zustand umfasst die Backware 1 einen Kern 10 aus porösem Teig und eine vollständig um den Kern 10 geschlossene Kruste 11, wobei die Vertiefung 2 durch die Kruste 11 der Backware 1 definiert wird. Die Vertiefung 2 ist an einem Ende geöffnet und am gegenüber liegenden Ende geschlossen. Eine Nut 6 ist an der Unterseite der Backware 1 ausgebildet und erstreckt sich in gerader Linie über die gesamte Länge der Backware 1. Die Backware 1 ist insgesamt rinnenförmig ausgebildet und umfasst ein U-förmiges, spiegelsymmetrisches Querschnittsprofil. Eine cremige Füllung 7 ist in der Vertiefung 2 aufgenommen. Durch die unterseitige Nut 6 ist die Backware 1 stabil, kippfrei und rollfrei auf einer ebenen Unterlage absetzbar, so dass die Füllung 7 ohne auszutreten in der Vertiefung 2 gehalten wird. Die Backware 1 ist für den Handverzehr bestimmt und dimensioniert.

Die Erfindung ist nicht auf die beschriebenen Ausführungsbeispiele beschränkt. Weitere bevorzugte Ausführungsformen ergeben sich durch beliebige Kombinationen aller hierin offenbarten Merkmale.

## Patentansprüche

1. Backvorrichtung (3) zur Herstellung einer Backware (1) aus einem Gärteig, insbesondere aus einem Brotteig, mit wenigstens einer rinnenförmigen Vertiefung (2), wobei die Backvorrichtung wenigstens eine rinnenförmige Aufnahme (4) für einen Teigrohling und wenigstens einen Stempel (5) aufweist, wobei die Backvorrichtung (3) zwischen einer Öffnungsstellung zum Einbringen des Teigrohlings in die Aufnahme (4) sowie zur Entnahme der Backware (1) aus der Backvorrichtung (3), und einer Arbeitsstellung, in welcher der Stempel (5) und die Aufnahme (4) einen Formhohlraum für die Backware (1) mit der rinnenförmigen Vertiefung (2) bilden, überführbar ist.

2. Backvorrichtung (3) nach Anspruch 1, **dadurch gekennzeichnet, dass** die Aufnahme (4) und der Stempel (5) komplementäre Geometrien aufweisen.

3. Backvorrichtung (3) nach wenigstens einem der vorangehenden Ansprüche, **dadurch gekennzeichnet, dass** die Aufnahme (4) und der Stempel (5) derart zusammenwirken, dass die rinnenförmige Vertiefung (2) der Backware (1) entlang der rinnenförmigen Aufnahme (4) ausgebildet wird und/oder die rinnenförmige Vertiefung (2) wenigstens einseitig, vorzugsweise beidseitig, abgesetzt wird.

4. Backvorrichtung (3) nach wenigstens einem der vorangehenden Ansprüche, **dadurch gekennzeichnet, dass** der Formhohlraum wenigstens einen vorzugsweise U-förmigen Spalt aufweist, in den der Teigrohling beim Gärprozess steigen kann, wobei der in den Spalt steigende Teig vorzugsweise wenigstens einen Rand der rinnenförmigen Vertiefung (2) bildet.

5. Backvorrichtung (3) nach wenigstens einem der vorangehenden Ansprüche, **dadurch gekennzeichnet, dass** die Backvorrichtung (3) eine Verriegelungseinrichtung aufweist, um den Stempel (5) in der Öffnungsstellung und/oder in der Arbeitsstellung der Backvorrichtung (3) gegenüber der Aufnahme (3) zu verriegeln.

6. Backvorrichtung (3) nach wenigstens einem der vorangehenden Ansprüche, **dadurch gekennzeichnet, dass** die Aufnahme (4) wenigstens eine der folgenden Anforderungen erfüllt:
a. Die Aufnahme (4) befindet sich in/an einer unteren Form der Backvorrichtung (3).
b. Die Aufnahme (4) umfasst eine Beschichtung, vorzugsweise eine Antihaftbeschichtung.
c. Die Aufnahme (4) umfasst im Wesentlichen ein spiegelsymmetrisches Querschnittsprofil, vorzugsweise ein U-förmiges oder ω-förmiges Querschnittsprofil.
d. Die Aufnahme (4) ist als Matrize ausgebildet.
e. Die Aufnahme (4) umfasst wenigstens zwei Arbeitsflächen (41), die sich zwischen dem Boden (43) und der Mündung (44) der Aufnahme (4) erstrecken und vorzugsweise und im Bereich einer Längsmittelachse der Aufnahme (4) treffen, wobei die Arbeitsflächen (41) bevorzugt einander zugewandt sind und zumindest in der Arbeitsstellung der Backvorrichtung (3) in Richtung des Stempels (5) weisen, wobei die Arbeitsflächen (41) vorzugsweise zur Mündung (44) der Aufnahme (4) hin eine abnehmende Krümmung aufweisen und/oder im Wesentlichen parabelförmig ausgebildet sind.
f. Die Aufnahme (4) umfasst wenigstens einen Vorsprung (42), der vorzugsweise in Richtung der Mündung (44) der Aufnahme (4) hervorsteht, wobei sich der Vorsprung (42) bevorzugt entlang oder parallel zur Längsachse der Aufnahme (4), bevorzugt über die gesamte Länge der Aufnahme (4), erstreckt, wobei die Höhe (H42) des Vorsprungs (42) vorzugsweise im Bereich von 2 bis 20%, bevorzugt im Bereich von 5 bis 10% der maximalen Höhe (H4) der Aufnahme (4) liegt, wobei sich der Vorsprung (42) bevorzugt gratförmig vom Boden (43) der Aufnahme (4) erhebt.
g. Die Aufnahme (4) erstreckt sich im Wesentlichen entlang einer geraden oder gekrümmten Linie.
h. Die Aufnahme (4) weist eine Länge (L4) im Bereich von 5 bis 50 cm, vorzugsweise eine Länge (L4) im Bereich von 15 bis 40 cm, bevorzugt eine Länge (L4) im Bereich von 25 bis 35 cm auf.
i. Die Aufnahme (4) weist eine maximale Breite (B4) im Bereich von 2 bis 10 cm, vorzugsweise eine maximale Breite (B4) im Bereich von 4 bis 8 cm, bevorzugt eine maximale Breite (B4) im Bereich von 5 bis 7 cm auf.
j. Die Aufnahme (4) weist eine maximale Höhe (H4) im Bereich von 1 bis 10 cm, vorzugsweise eine maximale Höhe (H4) im Bereich von 2 bis 8 cm, bevorzugt eine maximale Höhe (H4) im Bereich von 3 bis 5 cm auf.
k. Das Querschnittsprofil der Aufnahme (4) ist über wenigstens 50%, vorzugsweise über wenigstens 60%, bevorzugt über wenigstens 75% der Länge (L4), besonders bevorzugt über die gesamte Länge (L4) der Aufnahme (4) konstant.
l. Die Breite (B4) der Aufnahme (4) nimmt vom Boden (43) bis zur Mündung (44) der Aufnahme (4) zu.
m. Die Aufnahme (4) ist gegenüber dem Stempel (5) bewegbar.
n. Die Längsachse der Aufnahme (4) ist zumindest in der Arbeitsstellung der Backvorrichtung (3) im Wesentlichen in einer horizontalen Ebene ausgerichtet.
o. Eine Vielzahl von Aufnahmen (4) ist vorzugsweise parallel nebeneinander und/oder hintereinander in einer unteren Form der Backvorrichtung (3) ausgebildet.
p. Die Aufnahme ist aus Metall, vorzugsweise aus Aluminium, ausgebildet.

7. Backvorrichtung (3) nach wenigstens einem der vorangehenden Ansprüche, **dadurch gekennzeichnet, dass** der Stempel (5) wenigstens eine der folgenden Anforderungen erfüllt:
a. Der Stempel (5) befindet sich in/an einer oberen Form der Backvorrichtung (3).
b. Der Stempel (5) umfasst eine Beschichtung, vorzugsweise eine Antihaftbeschichtung.
c. Der Stempel (5) umfasst im Wesentlichen ein keilförmiges, vorzugsweise ein D-förmiges oder Δ-förmiges Querschnittsprofil, bevorzugt ein spiegelsymmetrisches Querschnittsprofil.
d. Der Stempel (5) ist als länglicher Profilstab ausgebildet.
e. Der Stempel (5) ist als Patrize ausgebildet.
f. Der Stempel (5) umfasst eine Basis (51), die zumindest in der Arbeitsstellung der Backvorrichtung (3) von der Aufnahme (4) abgewandt ist, und einen Scheitel (53), der zumindest in der Arbeitsstellung der Backvorrichtung (3) der Aufnahme (4) zugewandt ist, wobei sich die Breite (B4) des Stempels (5) vorzugsweise von der Basis (51) bis zum Scheitel (53) verringert.
g. Der Stempel (5) umfasst wenigstens zwei Arbeitsflächen (52), die sich zwischen der Basis (51) und dem Scheitel (53) erstrecken und vorzugsweise und im Bereich des Scheitels (53) treffen, wobei die Arbeitsflächen (52) bevorzugt voneinander abgewandt sind und zumindest in der Arbeitsstellung der Backvorrichtung (3) den Arbeitsflächen (41) der Aufnahme (4) zugewandt sind und/oder frontal gegenüberstehen, wobei die Arbeitsflächen (52) vorzugsweise erste Abschnitte (521) aufweisen, die bevorzugt angrenzend an die Basis (51) angeordnet sind und sich im Wesentlichen in parallelen Ebenen erstrecken, wobei die Arbeitsflächen (52) vorzugsweise zweite Abschnitte (522) aufweisen, die vorzugsweise zwischen der Basis (51) und dem Scheitel (53) angeordnet sind und zum Scheitel hin eine zunehmende Krümmung aufweisen, wobei die Arbeitsflächen (52) vorzugsweise dritte Abschnitte (523) aufweisen, die im Bereich des Scheitels (53) bündig ineinander übergehen.
h. Der Stempel (5) erstreckt sich zumindest in der Arbeitsstellung der Backvorrichtung (3) parallel zur Längsachse der Aufnahme (4).
i. Der Stempel (5) weist eine Länge (L5) im Bereich von 5 bis 35 cm, vorzugsweise im Bereich von 10 bis 30 cm, bevorzugt im Bereich von 15 bis 25 cm auf.
j. Der Stempel (5) weist eine maximale Breite (B5) im Bereich von 1 bis 8 cm, vorzugsweise im Bereich von 1,5 bis 4 cm, bevorzugt im Bereich von 2,5 bis 3,5 cm auf.
k. Der Stempel (5) weist eine maximale Höhe (H5) im Bereich von 2 bis 8 cm, vorzugsweise im Bereich von 3 bis 6 cm, bevorzugt im Bereich von 4 bis 5 cm auf.
l. Der Stempel (5) erstreckt sich zumindest in der Arbeitsstellung der Backvorrichtung (3) über wenigstens 50%, vorzugsweise über wenigstens 60%, bevorzugt über wenigstens 75% der Länge (L4) der Aufnahme (4) und/oder über weniger als 100%, vorzugsweise über weniger als 95%, bevorzugt über weniger als 90% der Länge (L4) der Aufnahme (4).
m. Der Stempel (5) erstreckt sich zumindest in der Arbeitsstellung der Backvorrichtung (3) über wenigstens 50%, vorzugsweise über wenigstens 60%, bevorzugt über wenigstens 75% der maximalen Breite (B4) und/oder der maximalen Höhe (H4) der Aufnahme (4).
n. Das Querschnittsprofil des Stempels (5) ist über wenigstens 50%, vorzugsweise über wenigstens 60%, bevorzugt über wenigstens 75% der Länge (L5), besonders bevorzugt über die gesamte Länge (L5) des Stempels (5) konstant.
o. Der Stempel (5) ist gegenüber der Aufnahme (4) bewegbar.
p. Die Längsachse des Stempels (5) ist zumindest in der Arbeitsstellung der Backvorrichtung (3) im Wesentlichen in einer horizontalen Ebene ausgerichtet.
q. Eine Vielzahl von Stempeln (5) ist vorzugsweise parallel nebeneinander und/oder hintereinander in einer oberen Form der Backvorrichtung (3) ausgebildet.
r. Der Stempel (5) ist aus Metall, vorzugsweise aus Aluminium, ausgebildet.

8. Backware (1) aus einem Gärteig, insbesondere aus einem Brotteig, mit wenigstens einer durch eine Backvorrichtung (3) erzeugten, rinnenförmigen Vertiefung (2), vorzugsweise hergestellt unter Verwendung der Backvorrichtung (3) nach wenigstens einem der Ansprüche 1 bis 7.

9. Backware nach Anspruch 8, **dadurch gekennzeichnet, dass** die Backware (1) wenigstens eine der folgenden Anforderungen erfüllt:
a. Die Backware (1) umfasst einen Kern (10) aus porösem Teig und eine vollständig um den Kern (10) geschlossene Kruste (11).
b. Die Vertiefung (2) wird durch die Kruste (11) der Backware (1) definiert.
c. Die Backware (1), insbesondere die Kruste (11) der Backware (1), bildet einen Rand um die Vertiefung (2), wobei der Rand vorzugsweise zusammenhängend und/oder U-förmig ausgebildet ist.
d. Die Vertiefung (2) ist an wenigstens einem Ende geöffnet und/oder an wenigstens einem Ende, vorzugsweise an beiden Enden, geschlossen.
e. Die Backware (1) umfasst wenigstens eine Nut (6) an einer von der Vertiefung (2) abweisenden Seite der Backware (1), wobei sich die Nut (6) vorzugsweise parallel zur Vertiefung (2) bevorzugt über die gesamte Länge der Backware (1) erstreckt.
f. Die Nut (6) wird durch die Kruste der Backware definiert.
g. Die Vertiefung (2) befindet sich an der Oberseite der Backware und/oder die Nut (6) an der Unterseite der Backware (1).
h. Die Backware (1) weist einen im Wesentlichen halbzylindrischen und/oder rinnenförmigen Umriss auf.
i. Die Backware (1) weist im Wesentlichen ein U-förmiges, V-förmiges oder W-förmiges Querschnittsprofil auf.
j. Die Backware (1) umfasst eine vorzugsweise cremige Füllung (7), die in der Vertiefung (2) aufgenommen ist.
k. Die Backware (1) ist stabil, vorzugsweise kippfrei und/oder rollfrei, auf einer ebenen Unterlage absetzbar, so dass die Füllung (7) ohne auszutreten in der Vertiefung (2) gehalten wird.
l. Die Backware (1) umfasst wenigstens zwei voneinander beabstandete Aufstandflächen zum Aufstellen der Backware (1) auf eine ebene Unterlage, wobei die Nut (6) und/oder die Vertiefung (2) vorzugsweise zwischen den Aufstandflächen angeordnet ist.
m. Die Backware (1) ist für den Handverzehr bestimmt und dimensioniert.

10. Verfahren zur Herstellung einer Backware (1) aus einem Gärteig, vorzugsweise der Backware (1) nach wenigstens einem der Ansprüche 8 oder 9, bevorzugt unter Verwendung der Backvorrichtung (3) nach wenigstens einem der Ansprüche 1 bis 7, umfassend folgende Schritte:
a. Bereitstellen der Backvorrichtung (3) in der Öffnungsstellung,
b. Anordnen eines vorzugsweise länglichen Teigrohlings in der Aufnahme der Backvorrichtung (3),
c. Überführen der Backvorrichtung (3) aus der Öffnungsstellung in die Arbeitsstellung, so dass der Teigrohling in der Aufnahme (4) verteilt wird und/oder die wenigstens eine rinnenförmige Vertiefung (2) im Teigrohling ausgebildet wird,
d. Gären und ggf. Backen, insbesondere Vorbacken und/oder Tiefkühlen und/oder Fertigbacken des Teigrohlings in der Arbeitsstellung der Backvorrichtung (3),
e. Überführen der Backvorrichtung (3) aus der Arbeitsstellung in die Öffnungsstellung, und
f. Entnahme der Backware (1) aus der Backvorrichtung (3), und ggf. Einbringen einer Füllung (7) in die Vertiefung (2) der Backware (1).
